(19) Europäisches Patentamt
European Patent Office
Office européen des brevets

(11) EP 2 598 614 B1

(12) # FASCICULE DE BREVET EUROPEEN

(45) Date de publication et mention de la délivrance du brevet:
**22.10.2014 Bulletin 2014/43**

(21) Numéro de dépôt: **11743265.8**

(22) Date de dépôt: **24.06.2011**

(51) Int Cl.:
***C10G 47/20*** (2006.01) ***B01J 23/652*** (2006.01)
***B01J 23/85*** (2006.01) ***B01J 37/08*** (2006.01)
***C10G 47/12*** (2006.01) ***C10G 47/06*** (2006.01)
***B01J 37/03*** (2006.01) ***B01J 37/20*** (2006.01)
***B01J 23/883*** (2006.01) ***B01J 27/19*** (2006.01)

(86) Numéro de dépôt international:
**PCT/FR2011/000371**

(87) Numéro de publication internationale:
**WO 2012/022852 (23.02.2012 Gazette 2012/08)**

(54) **PROCEDE D'HYDROCRAQUAGE D'UNE CHARGE HYDROCARBONEE EN PRESENCE D'UN CATALYSEUR SULFURE PREPARE AU MOYEN D'UN OLIGOSACCHARIDE CYCLIQUE**

VERFAHREN ZUM HYDROCRACKING EINES KOHLENWASSERSTOFF-ROHMATERIALS UNTER VERWENDUNG EINES AUS MINDESTENS EINEM ZYKLISCHEN OLIGOSACCHARID HERGESTELLTEN GETRÄGERTEN SULFID-KATALYSATORS

METHOD FOR HYDROCRACKING A HYDROCARBON FEEDSTOCK IN THE PRESENCE OF A SULFIDE CATALYST PREPARED USING A CYCLIC OLIGOSACCHARIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2010 FR 1003181**

(43) Date de publication de la demande:
**05.06.2013 Bulletin 2013/23**

(73) Titulaire: **IFP Energies nouvelles**
**92852 Rueil-Malmaison Cedex (FR)**

(72) Inventeurs:
- **DIEHL, Fabrice**
  **F-69007 Lyon (FR)**
- **BONDUELLE, Audrey**
  **F-69340 Francheville (FR)**

(56) Documents cités:
**EP-A1- 1 535 983** **US-A- 4 426 292**
**US-A1- 2008 269 533** **US-A1- 2009 074 641**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 598 614 B1

## Description

Domaine de l'invention

La présente invention se rapporte au domaine des procédés d'hydrocraquage (HCK) de charges hydrocarbonées dont au moins 20% volume comprend des composés ayant un point d'ébullition supérieur ou égal à 340°C. L'objectif du procédé est essentiellement la production de distillats moyens correspondant aux coupes kérosène et gazole, c'est-à-dire de coupes ayant un point d'ébullition initial préférentiellement d'au moins 150°C et un point d'ébullition final préférentiellement d'au plus 370°C, voire d'au plus 340°C.

Art antérieur

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, carburéacteurs et gazoles, de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Généralités sur les catalyseurs d'hydrocraquage (HCK) de charges hydrocarbonées.

La composition et l'utilisation des catalyseurs d'hydrocraquage de charges hydrocarbonées sont respectivement bien décrits dans l'ouvrage "Hydrocracking Science and Technology", 1996, J. Scherzer, A. J. Gruia, Marcel Dekker Inc et dans l'article de B. S Clausen, H. T. Topsøe, F. E. Massoth, issu de l'ouvrage "Catalysis Science and Technology", 1996, volume 11, Springer-Verlag.

Les catalyseurs d'HCK sont du type bifonctionnel : ils associent une fonction acide à une fonction hydro-déshydrogénante. La fonction acide est apportée par des supports poreux dont les surfaces varient généralement de 150 à 800 $m^2.g^{-1}$ et présentant une acidité superficielle, telles que les alumines halogénées (chlorées ou fluorées notamment), les combinaisons d'oxydes de bore et d'aluminium, les aluminosilicates mésoporeux amorphes ou cristallisés et les zéolithes dispersées dans un liant oxyde. La fonction hydro-déshydrogénante est apportée par la présence d'une phase active à base d'au moins un métal du groupe VIB et éventuellement au moins un métal du groupe VIII du tableau périodique des éléments. Les formulations les plus courantes sont de type nickel-molybdène (NiMo) et nickel-tungstène (NiW) et plus rarement de type cobalt-molybdène (CoMo). Après préparation, la fonction hydro-déshydrogénante se présente souvent sous forme d'oxyde. La forme active et stable pour les procédés d'HCK étant la forme sulfurée, ces catalyseurs doivent subir une étape de sulfuration. Celle-ci peut être réalisée dans l'unité du procédé associé (on parle alors de sulfuration *in-situ*) ou préalablement au chargement du catalyseur dans l'unité (on parle alors de sulfuration *ex-situ*).

L'équilibre entre les deux fonctions acide et hydro-déshydrogénante est un des paramètres qui régit l'activité et la sélectivité des catalyseurs d'HCK. Une fonction acide faible et une fonction hydro-déshydrogénante forte donnent des catalyseurs peu actifs, travaillant à une température en général élevée (supérieure ou égale à 390-400°C) et avec une vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens. Inversement, une fonction acide forte et une fonction hydro-déshydrogénante faible donnent des catalyseurs actifs, mais présentant de moins bonnes sélectivités en distillats moyens (carburéacteurs et gazoles). Un type de catalyseurs conventionnels d'HCK est à base de supports amorphes modérément acides, tels les aluminosilicates mésoporeux par exemple. Ces systèmes sont utilisés pour produire des distillats moyens de bonne qualité et, éventuellement, des bases huiles. Ces catalyseurs sont par exemple utilisés dans les procédés en une étape.

Il est généralement connu de homme du métier que de bonnes performances catalytiques dans les domaines d'application mentionnés ci-dessus sont fonction 1) de la nature de la charge hydrocarbonée à traiter, 2) du procédé employé, 3) des conditions opératoires de fonctionnement choisies et 4) du catalyseur utilisé. Dans ce dernier cas, il est également admis qu'un catalyseur présentant un fort potentiel catalytique se caractérise 1) par une fonction hydro-déshydrogénante optimisée (phase active associée parfaitement dispersée à la surface du support et présentant une teneur en métal élevée) et 2) par un bon équilibre entre ladite fonction hydro-déshydrogénante et la fonction craquante comme mentionné ci-dessus. Notons également que, idéalement, quelle que soit la nature de la charge hydrocarbonée

à traiter, le catalyseur doit pouvoir présenter une accessibilité des sites actifs vis-à-vis des réactifs et produits de réactions tout en développant une surface active élevée, ce qui conduit à des contraintes spécifiques en terme de structure et de texture propres au support oxyde constitutif desdits catalyseurs.

Les méthodes usuelles conduisant à la formation de la phase hydro-déshydrogénante des catalyseurs d'HCK consistent en un dépôt de précurseur(s) moléculaire(s) d'au moins un métal du groupe VIB et éventuellement au moins un métal du groupe VIII sur un support oxyde acide par la technique dite "d'imprégnation à sec" suivi des étapes de maturation, séchage et calcination conduisant à la formation de la forme oxydée du(des)dit(s) métal(aux) employé(s). Vient ensuite l'étape finale de sulfuration génératrice de la phase active hydro-déshydrogénante comme mentionné ci-dessus.

Les performances catalytiques de catalyseurs issus de ces protocoles de synthèse "conventionnels" ont largement été étudiées. En particulier, il a été montré que, pour des teneurs en métal relativement élevées, des phases réfractaires à la sulfuration formées consécutivement à l'étape de calcination (phénomène de frittage) apparaissent (B. S Clausen, H. T. Topsøe, et F.E. Massoth, issu de l'ouvrage "Catalysis Science and Technology", 1996, volume 11, Springer-Verlag). Par exemple, dans le cas des catalyseurs de type CoMo ou NiMo supporté sur un support de nature aluminique, il s'agit 1) de cristallites de $MoO_3$, NiO, CoO, $CoMoO_4$ ou $Co_3O_4$, de taille suffisante pour être détectés en DRX, et/ou 2) des espèces du type $Al_2(MoO_4)_3$, $CoAl_2O_4$ ou $NiAl_2O_4$. Les trois espèces précitées contenant l'élément aluminium sont bien connues de l'Homme du métier. Elles résultent de l'interaction entre le support aluminique et les sels précurseurs en solution de la phase active hydro-déshydrogénante, ce qui se traduit concrètement par une réaction entre des ions $Al^{3+}$ extraits de la matrice aluminique et lesdits sels pour former des hétéropolyanions d'Anderson de formule $(Al(OH)_6Mo_6O_{18}]^{3-}$, eux-mêmes précurseurs des phases réfractaires à la sulfuration. La présence de l'ensemble de ces espèces conduit à une perte indirecte non négligeable de l'activité catalytique du catalyseur associé car la totalité des éléments appartenant au moins à un métal du groupe VIB et éventuellement au moins un métal du groupe VIII n'est pas utilisée au maximum de son potentiel puisque une partie de ceux-ci est immobilisée dans des espèces peu ou non actives.

EP 1 535 983 divulgue un procédé d'hydrocraquage d'une charge hydrocarbonée lourde, ledit procédé comprenant la mise en contact de ladite charge hydrocarbonée avec au moins un catalyseur comprenant au moins un support acide et au moins une phase active formée d'au moins un métal du groupe VIII et d' au moins un métal du groupe VIB, ledit catalyseur étant préparée selon un procédé comprenant au moins une étape de mise en contact d'au moins dudit support avec au moins une solution contenant au moins un précurseur d'au moins dudit métal du groupe VIII, au moins un précurseur d'au moins dudit métal du groupe VIB, une étape de séchage, une étape de traitement thermique et une étape de sulfuration.

Les performances catalytiques des catalyseurs conventionnels décrits ci-dessus pourraient donc être améliorées, notamment en développant de nouvelles méthodes de préparation de ces catalyseurs qui permettraient :

1) d'assurer une bonne dispersion de la phase hydro-déshydrogénante, en particulier pour des teneurs en métal élevées (par exemple par contrôle de la taille des particules à base de métaux de transition, maintien des propriétés de ces particules après traitement thermique, etc.),

2) de limiter la formation des espèces réfractaires à la sulfuration (par exemple par l'obtention d'une meilleure synergie entre les métaux de transition constitutifs de la phase active, contrôle des interactions entre la phase active hydro-déshydrogénante (et/ou ses précurseurs) et le support poreux employé, etc.),

En particulier, il est connu d'améliorer l'activité des catalyseurs d'hydrocraquage en procédant à une modification de la fonction hydro-déshydrogénante ou de la fonction acide.

De manière plus générale, différents travaux ont été conduits dans le développement de phases sulfures de catalyseurs d'hydrotraitement plus actives. Par exemple, l'ajout d'un composé organique sur les catalyseurs d'hydrotraitement pour améliorer leur activité est maintenant bien connue de l'homme du métier. De nombreux brevets et demandes de brevets décrivent l'utilisation de différentes familles de composés organiques, tels que les mono,-di-ou polyalcools éventuellement éthérifiés (WO 96/41848, WO 01/76741, US 4.012.340, US 3.954.673). Des catalyseurs modifiés avec des monoesters en C2-C14 sont décrits dans les demandes de brevet EP 466.568 et EP 1.046.424. La préparation de ces catalyseurs d'hydrotraitement selon l'art antérieur se termine par un traitement thermique effectué à une température suffisamment basse pour ne pas décomposer les composés organiques, utilisés au cours de la préparation, avant la mise en oeuvre desdits catalyseurs dans un procédé d'hydrotraitement.

Cependant, ces modifications apportés par l'imprégnation de composés organiques au cours de la préparation ne permettent pas toujours d'accroître suffisamment les performances des catalyseurs. Aussi, toute autre méthodologie de synthèse conduisant à des interactions innovantes entre un support oxyde et des précurseurs des phases actives sont extrêmement intéressantes.

Résumé et intérêt de l'invention

La présente invention a pour objet un procédé d'hydrocraquage d'une charge hydrocarbonée dont au moins 20% volume comprend des composés ayant un point d'ébullition supérieur ou égal à 340°C, ledit procédé consistant en la mise en contact de ladite coupe hydrocarbonée avec au moins un catalyseur comprenant au moins un support acide et au moins une phase active formée d'au moins un métal du groupe VIII et d'au moins un métal du groupe VIB, ledit catalyseur étant préparé selon un procédé comprenant successivement au moins :

- i) au moins l'une des étapes choisies parmi :
  - i1) au moins une étape de mise en contact d'au moins un précatalyseur comprenant au moins ledit métal du groupe VIII, au moins ledit métal du groupe VIB et au moins ledit support acide avec au moins un composé organique formé d'au moins un oligosaccharide cyclique composé d'au moins 6 sous-unités glucopyranose liées en $\alpha$-(1,4),
  - i2) au moins une étape de mise en contact d'au moins dudit support acide avec au moins une solution contenant au moins un précurseur d'au moins dudit métal du groupe VIII, au moins un précurseur d'au moins dudit métal du groupe VIB et au moins un composé organique formé d'au moins un oligosaccharide cyclique composé d'au moins 6 sous-unités glucopyranose liées en $\alpha$-(1,4), et
  - i3) au moins une première étape de mise en contact d'au moins dudit support acide avec au moins un composé organique formé d'au moins un oligosaccharide cyclique composé d'au moins 6 sous-unités glucopyranose liées en $\alpha$-(1,4) suivie d'au moins une deuxième étape de mise en contact du solide acide issu de ladite première étape avec au moins un précurseur d'au moins dudit métal du groupe VIII et au moins un précurseur d'au moins dudit métal du groupe VIB ;
- ii) au moins une étape de séchage,
- iii) au moins une étape de traitement thermique pour décomposer ledit composé organique, et
- iv) au moins une étape de sulfuration de sorte que la phase active se présente sous forme sulfure.

De manière surprenante, il a été découvert qu'un catalyseur sulfure supporté dont la phase active comporte au moins un métal du groupe VIII et au moins un métal du groupe VIB, préparé en présence d'au moins un composé organique formé d'au moins un oligosaccharide cyclique composé d'au moins 6 sous-unités glucopyranose liées en $\alpha$-(1,4), préférentiellement d'une cyclodextrine, présente, lorsqu'il est mis en oeuvre dans un procédé d'hydrocraquage d'une coupe hydrocarbonée dont au moins 20% volume comprend des composés ayant un point d'ébullition supérieur ou égal à 340°C, des performances catalytiques améliorées, notamment en terme d'activité catalytique et/ou en terme de sélectivité envers les distillats moyens correspondant aux coupes kérosène et gazole.

Description de l'invention

La présente invention a pour objet un procédé d'hydrocraquage d'une charge hydrocarbonée dont au moins 20% volume comprend des composés ayant un point d'ébullition supérieur ou égal à 340°C, ledit procédé consistant en la mise en contact de ladite coupe hydrocarbonée avec au moins un catalyseur comprenant au moins un support acide et au moins une phase active formée d'au moins un métal du groupe VIII et d'au moins un métal du groupe VIB, ledit catalyseur étant préparé selon un procédé comprenant successivement au moins :

- i) au moins l'une des étapes choisies parmi :
  - i1) au moins une étape de mise en contact d'au moins un précatalyseur comprenant au moins ledit métal du groupe VIII, au moins ledit métal du groupe VIB et au moins ledit support acide avec au moins un composé organique formé d'au moins un oligosaccharide cyclique composé d'au moins 6 sous-unités glucopyranose liées en $\alpha$-(1,4),
  - i2) au moins une étape de mise en contact d'au moins dudit support acide avec au moins une solution contenant au moins un précurseur d'au moins dudit métal du groupe VIII, au moins un précurseur d'au moins dudit métal du groupe VIB et au moins un composé organique formé d'au moins un oligosaccharide cyclique composé d'au moins 6 sous-unités glucopyranose liées en $\alpha$-(1,4), et
  - i3) au moins une première étape de mise en contact d'au moins dudit support acide avec au moins un composé organique formé d'au moins un oligosaccharide cyclique composé d'au moins 6 sous-unités glucopyranose liées en $\alpha$-(1,4) suivie d'au moins une deuxième étape de mise en contact du solide acide issu de ladite première étape avec au moins un précurseur d'au moins dudit métal du groupe VIII et au moins un précurseur d'au moins

dudit métal du groupe VIB ;

ii) au moins une étape de séchage,
iii) au moins une étape de traitement thermique pour décomposer ledit composé organique, et
iv) au moins une étape de sulfuration de sorte que la phase active se présente sous forme sulfure.

La charge hydrocarbonée traitée selon le procédé d'hydrocraquage de l'invention est une charge dont au moins 20% volume, de préférence au moins 80% volume, comprend des composés ayant un point d'ébullition supérieur ou égal à 340°C.

Ladite charge hydrocarbonée est avantageusement choisie parmi les LCO (Light Cycle Oil (gazoles légers issus d'une unité de craquage catalytique)), les distillats atmosphériques, les distillats sous vide par exemple gasoils issus de la distillation directe du brut ou d'unités de conversion telles que le FCC, le coker ou la viscoréduction, les charges provenant d'unités d'extraction d'aromatiques, des bases d'huile lubrifiante ou issues du déparaffinage au solvant des bases d'huile lubrifiante, les distillats provenant de procédés de désulfuration ou d'hydroconversion en lit fixe ou en lit bouillonnant de RA (résidus atmosphériques) et/ou de RSV (résidus sous vide) et/ou d'huiles désasphaltées, ou encore la charge peut être une huile désasphaltée ou comprendre des huiles végétales ou bien encore provenir de la conversion de charges issues de la biomasse. Ladite charge hydrocarbonée traitée selon le procédé d'hydrocraquage de l'invention peut encore être un mélange desdites charges précédemment citées. Conformément à l'invention, toute charge ayant un point d'ébullition T5 supérieur à 340°C, préférentiellement supérieur à 370°C, c'est à dire telle que 95% poids des composés présents dans ladite charge ont un point d'ébullition supérieur à 340°C, et préférentiellement supérieur à 370°C, convient pour la mise en oeuvre du procédé d'hydrocraquage selon l'invention. Les composés hydrocarbonés présents dans ladite charge sont des composés aromatiques, des composés oléfiniques, des composés naphténiques et/ou des composés paraffiniques.

Ladite charge hydrocarbonée comprend avantageusement des hétéroatomes. De manière préférée, lesdits hétéroatomes sont choisis parmi l'azote, le soufre et le mélange de ces deux éléments. Lorsque l'azote est présent dans ladite charge à traiter, la teneur en azote est supérieure ou égale à 500 ppm, de préférence elle est comprise entre 500 et 10000 ppm poids, de manière plus préférée entre 700 et 4000 ppm poids et de manière encore plus préférée entre 1000 et 4000 ppm. Lorsque le soufre est présent dans ladite charge à traiter, la teneur en soufre est comprise entre 0,01 et 5% poids, de manière préférée comprise entre 0,2 et 4% poids et de manière encore plus préférée entre 0,5 et 3 % poids.

Ladite charge hydrocarbonée peut éventuellement avantageusement contenir des métaux, en particulier du nickel et du vanadium. La teneur cumulée en nickel et vanadium de ladite charge hydrocarbonée, traitée selon le procédé d'hydrocraquage selon l'invention, est de préférence inférieure à 1 ppm poids. La teneur en asphaltènes de ladite charge hydrocarbonée est généralement inférieure à 3000 ppm, de manière préférée inférieure à 1000 ppm, de manière encore plus préférée inférieure à 200 ppm.

Le catalyseur, dit catalyseur d'hydrocraquage, utilisé pour la mise en oeuvre dudit procédé d'hydrocraquage selon l'invention comprend au moins une phase active formée d'au moins un métal du groupe VIII de la classification périodique des éléments et d'au moins un métal du groupe VIB de la classification périodique des éléments, le(s)dit(s) métal(ux) du groupe VIII et le(s)dit(s) métal(ux) du groupe VIB assurant la fonction hydro-déshydrogénante dudit catalyseur.

De manière préférée, ledit catalyseur comprend avantageusement un ou plusieurs dopants choisi(s) parmi le phosphore, le bore et le fluor et le mélange de ces éléments. Ces éléments dopants apportent de l'acidité et peuvent permettre d'accroître l'activité catalytique des métaux des groupes VIB et VIII. De manière préférée, la composition dudit catalyseur d'hydrocraquage comprend du phosphore.

De manière générale, la teneur totale en éléments hydro-déshydrogénants, c'est-à-dire en métal(ux) du groupe VIII et en métal(ux) du groupe VIB, est supérieure à 10 % poids oxydes de métaux des groupes VIB et VIII par rapport au poids total du catalyseur, de préférence elle est comprise entre 10 et 50 % poids d'oxydes de métaux des groupes VIB et VIII par rapport au poids total du catalyseur. La teneur en métal(ux) du groupe VIB est comprise entre 6 et 40% poids d'oxyde(s) de métal(ux) du groupe VIB par rapport au poids total du catalyseur, de préférence entre 8 et 37% poids et de manière plus préférée entre 10 et 35% poids d'oxyde(s) de métal(ux) du groupe VIB par rapport au poids total du catalyseur. La teneur en métal(ux) du groupe VIII est comprise entre 1 et 10% poids d'oxyde(s) de métal(ux) du groupe VIII par rapport au poids total du catalyseur, de préférence entre 1,2 et 9% poids et de manière plus préférée entre 1,5 et 8% poids d'oxyde(s) de métal(ux) du groupe VIII par rapport au poids total du catalyseur. Les pourcentages poids en métaux des groupes VIII et VIB indiqués ci-dessus sont exprimés par rapport au poids total du catalyseur issu de ladite étape iii) du procédé de préparation du catalyseur mis en oeuvre dans le procédé d'hydrocraquage selon l'invention. Ledit catalyseur se trouve alors sous forme oxyde.

Le métal du groupe VIB présent dans la phase active du catalyseur mis en oeuvre dans le procédé d'hydrocraquage selon l'invention est préférentiellement choisi parmi le molybdène, le tungstène et le mélange de ces deux

éléments, et très préférentiellement, le métal du groupe VIB est le molybdène. Le métal du groupe VIII présent dans la phase active du catalyseur mis en oeuvre dans le procédé d'hydrocraquage selon l'invention est préférentiellement choisi parmi les métaux non nobles du groupe VIII de la classification périodique des éléments. De manière préférée, ledit métal du groupe VIII est choisi parmi le cobalt, le nickel et le mélange de ces deux éléments, et très préférentiellement, le métal du groupe VIII est le nickel.

Conformément à l'invention, la fonction hydro-déshydrogénante est choisie dans le groupe formé par la combinaison des éléments nickel-molybdène, nickel-molybdène-tungstène et nickel-tungstène.

Le rapport molaire métal(ux) du groupe VIII sur métal(ux) du groupe VIB dans le catalyseur oxyde issu de ladite étape iii) est préférentiellement compris entre 0,1 et 0,8, très préférentiellement compris entre 0,15 et 0,6, et de manière encore plus préférée compris entre 0,2 et 0,5.

Lorsque le catalyseur d'hydrocraquage contient du phosphore en tant que dopant, la teneur en phosphore dans ledit catalyseur oxyde issu de ladite étape iii) est de préférence comprise entre 0,1 et 10 % poids de $P_2O_5$, de manière plus préférée entre 0,2 et 8 % poids de $P_2O_5$, de manière très préférée entre 0,3 et 5 % poids de $P_2O_5$. Le rapport molaire phosphore sur métal(ux) du groupe VIB dans le catalyseur oxyde issu de ladite étape iii) est supérieur ou égal à 0,05, de préférence supérieur ou égal à 0,07, de manière plus préférée compris entre 0,08 et 0,5.

Lorsque le catalyseur d'hydrocraquage contient du bore en tant que dopant, la teneur en bore dans ledit catalyseur oxyde issu de ladite étape iii) est de préférence comprise entre 0,1 et 10 % poids d'oxyde de bore, de manière plus préférée entre 0,2 et 7 % poids d'oxyde de bore, de manière très préférée entre 0,2 et 5 % poids d'oxyde de bore.

Lorsque le catalyseur d'hydrocraquage contient du fluor en tant que dopant, la teneur en fluor dans ledit catalyseur oxyde issu de ladite étape iii) est de préférence comprise entre 0,1 et 10 % poids de fluor, de manière plus préférée entre 0,2 et 7 % poids de fluor, de manière très préférée entre 0,2 et 5 % poids de fluor.

Le support du catalyseur d'hydrocraquage mis en oeuvre dans le procédé d'hydrocraquage selon l'invention est un support acide choisi parmi les matrices minérales poreuses acides et les matrices minérales poreuses contenant des cristaux zéolithiques. Ledit support est formé d'au moins un oxyde. Lorsque le support est composé d'une matrice minérale poreuse acide, ladite matrice minérale poreuse acide est de préférence amorphe ou mal cristallisée. Elle est choisie parmi les silices-alumines dont la teneur pondérale en silice dans ledit support est strictement supérieure à 15%, de préférence supérieure ou égale à 20%, cristallisées ou non, mésostructurées ou non, les alumines dopées (notamment au bore, au fluor ou au phosphore), les tamis moléculaires cristallisés non zéolithiques tels que les silicoaluminophosphates, les aluminophosphates, les ferrosilicates, les silicoaluminates de titane, les borosilicates, les chromosilicates et les aluminophosphates de métaux de transition (dont le cobalt).

La matrice minérale poreuse acide peut également avantageusement renfermer, en plus d'au moins un des composés oxydes cités ci-dessus, au moins une argile simple synthétique ou naturelle de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées.

Lorsque le support est composé d'une matrice minérale poreuse contenant des cristaux zéolithiques, ladite matrice peut être acide ou non. Une matrice minérale acide avantageusement présente dans le support du catalyseur d'hydrocraquage est de préférence choisie parmi les silices-alumines dont la teneur pondérale en silice dans ledit support est strictement supérieure à 15%, de préférence supérieure ou égale à 20%, cristallisées ou non, mésostructurées ou non, les alumines dopées (notamment au bore, au fluor ou au phosphore), les tamis moléculaires cristallisés non zéolithiques tels que les silicoaluminophosphates, les aluminophosphates, les ferrosilicates, les silicoaluminates de titane, les borosilicates, les chromosilicates et les aluminophosphates de métaux de transition (dont le cobalt). Lorsque ledit support est à base d'une matrice minérale qui n'est pas acide, ladite matrice est avantageusement choisie parmi les alumines de transition, la silicalite et les silices notamment les silices mésoporeuses. Par alumine de transition, on entend par exemple une alumine phase alpha, une alumine phase delta, une alumine phase gamma ou un mélange d'alumine de ces différentes phases.

Les cristaux zéolithiques présents dans ledit support acide sont des cristaux formés d'au moins une zéolithe choisie parmi la zéolithe Y, la zéolithe Y fluorée, la zéolithe Y contenant des terres rares, la zéolithe 10 X, la zéolithe L, la mordénite à petits pores, la mordénite à grands pores, la zéolithe oméga, la zéolithe NU-10, la zéolithe ZSM-5, la zéolithe ZSM-48, la zéolithe ZSM-22, la zéolithe ZSM-23, la zéolithe ZBM-30, la zéolithe EU-1, la zéolithe EU-2, la zéolithe EU-11, la zéolithe Bêta, la zéolithe A, la zéolithe NU-87, la zéolithe NU-88, la zéolithe NU-86, la zéolithe NU-85, la zéolithe IM-5, la zéolithe IM-12, la zéolithe IZM-2 et la ferriérite. Lesdits cristaux zéolithiques présentent avantageusement un rapport atomique de charpente silicium/aluminium (Si/Al) supérieur à 3 :1. De manière préférée, lesdits cristaux sont formés d'au moins une zéolithe de type structural FAU, notamment d'une zéolithe Y stabilisée ou ultrastabilisée (USY) soit sous forme au moins partiellement échangée avec des cations métalliques, par exemple des cations des métaux alcalino-terreux et/ou des cations de métaux de terres rares de numéro atomique 57 à 71 inclus, soit sous forme hydrogène (Zeolite Molecular Sieves Structure, Chemistry and Uses, D.W. BRECK, J.WILLEY and sons 1973).

Le volume poreux du support acide du catalyseur mis en oeuvre dans le procédé d'hydrocraquage selon l'invention est généralement compris entre 0,1 et 1,2 $cm^3/g$, de préférence compris entre 0,2 et 1 $cm^3/g$. La surface

spécifique du support est généralement comprise entre 50 et 1000 $m^2/g$, de préférence entre 100 et 600 $m^2/g$. Ledit support poreux est mis en forme de telle sorte qu'il se présente avantageusement sous forme de billes, d'extrudés, de pastilles, ou d'agglomérats irréguliers et non sphériques dont la forme spécifique peut résulter d'une étape de concassage. De manière très avantageuse, ledit support se présente sous forme de billes ou d'extrudés. Ledit support est très avantageusement calciné à une température préférentiellement comprise entre 300 et 600°C après mise en forme. Selon un mode préféré, ledit support comprend en partie des métaux des groupes VIB et VIII et/ou en partie du phosphore et/ou au moins en partie un dopant.

Conformément à ladite étape i) du procédé de préparation du catalyseur mis en oeuvre dans le procédé d'hydrocraquage selon l'invention, ledit catalyseur d'hydrocraquage est préparé en présence d'au moins un composé organique formé d'au moins un oligosaccharide cyclique composé d'au moins 6 sous-unités glucopyranose liées en α-(1,4). Une représentation spatiale d'une sous-unité glucopyranose est donnée ci-dessous :

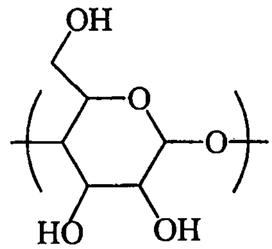

Ledit composé organique est préférentiellement choisi parmi les cyclodextrines, les cyclodextrines substituées, les cyclodextrines polymérisées et les mélanges de cyclodextrines. Les cyclodextrines sont une famille d'oligosaccharides cycliques composés de sous-unités glucopyranose liées en α-(1,4). Il s'agit de molécules-cages. Conformément à l'invention, les cyclodextrines préférentiellement utilisées pour la mise en oeuvre de ladite étape i) du procédé de préparation du catalyseur d'hydrocraquage, c'est-à-dire pour la mise en oeuvre d'au moins l'une des étapes choisies parmi i1), i2) et i3), sont l'α-cyclodextrine, la β-cyclodextrine et la γ-cyclodextrine respectivement composées de 6, 7 et 8 sous-unités glucopyranose liées en α-(1,4). Les représentations développées de l'α-cyclodextrine, de la β-cyclodextrine et de la γ-cyclodextrine sont données ci-dessous. On utilise préférentiellement pour la mise en oeuvre de ladite étape i) la β-cyclodextrine composée de 7 sous-unités glucopyranose liées en α-(1,4). Les cyclodextrines sont des composés commercialisés.

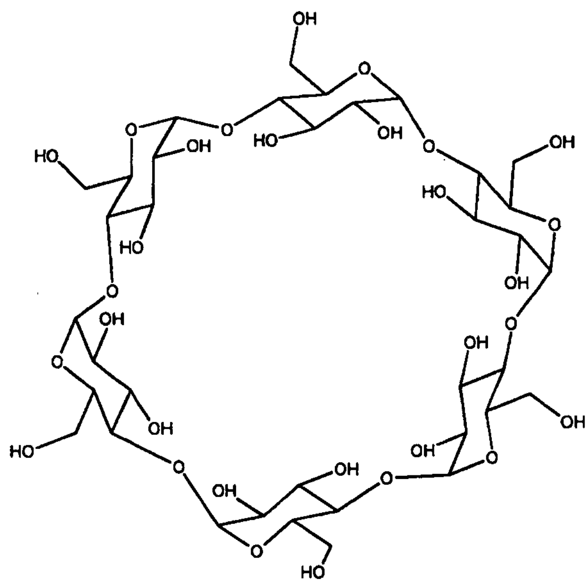

α-cyclodextrine

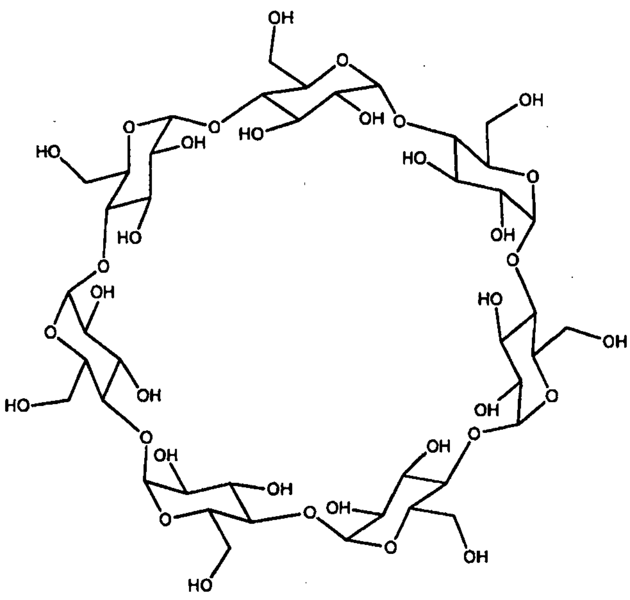

β-cyclodextrine

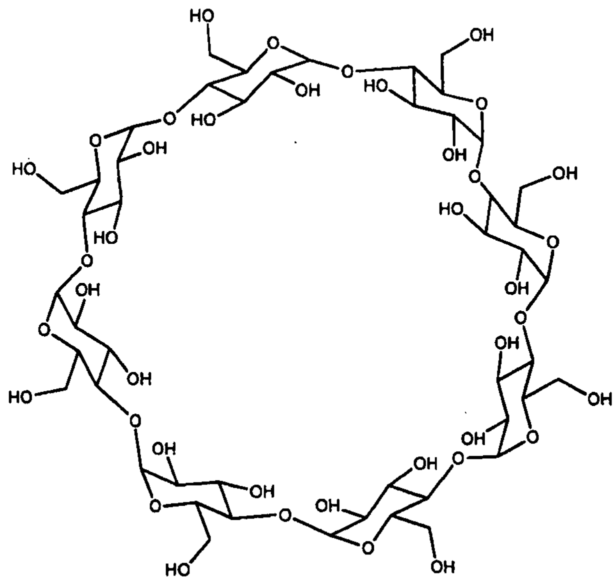

γ-cyclodextrine

Les cyclodextrines substituées avantageusement employées pour la mise en oeuvre de ladite étape i) du procédé de préparation du catalyseur d'hydrocraquage, c'est-à-dire pour la mise en oeuvre d'au moins l'une des étapes choisies parmi i1), i2) et i3), sont constituées de 6, 7 ou 8 sous-unités glucopyranose liées en α-(1,4), dont l'une au moins est mono- ou polysubstituée. Les substituants peuvent être fixés sur un ou plusieurs groupe(s) hydroxyle(s) présent(s) dans la molécule, à savoir sur les groupes hydroxyles directement liés au cycle d'une unité glucopyranose et/ou sur l'hydroxyle lié au groupement $CH_2$ lui-même lié au cycle d'une unité glucopyranose. De manière plus préférée, lesdites cyclodextrines substituées portent un ou plusieurs substituant(s), identique(s) ou différent(s), choisi(s) parmi les radicaux alkyles saturés ou non, fonctionnalisés ou non, et les fonctions esters, carbonyles, carboxyles, carboxylates, phosphates, éthers, polyéthers, urées, amide, amino, triazole, ammonium. Les cyclodextrines substituées préférées sont les cyclodextrines méthylées, éthylées, propylées, allylées (c'est-à-dire possédant une fonction ayant pour formule semi-développée $-CH_2-CH=CH_2$), succinylées (c'est-à-dire possédant une fonction ayant pour formule semi-développée $R-OCO-CH_2-CH_2COOH$), carboxylées, carboxyméthylées, acétylées, 2-hydroxypropylées et polyoxyéthylénées. Les groupements mono- ou polysubstituants de la cyclodextrine peuvent aussi être une molécule de monosaccharide ou disaccharide telle qu'une molécule de maltose, glucose, fructose ou saccharose. Les cyclodextrines substituées particulièrement avantageuses pour la mise en oeuvre de ladite étape i) du procédé de préparation du catalyseur d'hydrocraquage, c'est-à-dire pour la mise en oeuvre d'au moins l'une des étapes choisies parmi i1), i2) et i3), sont l'hydroxypropyl bêta-cyclodextrine et les bêta-cyclodextrines méthylées.

Les cyclodextrines polymérisées avantageusement employées pour la mise en oeuvre de ladite étape i), c'est-à-dire pour la mise en oeuvre d'au moins l'une des étapes choisies parmi i1), i2) et i3), sont des polymères dont les monomères sont chacun constitués d'un oligosaccharide cyclique composé de 6, 7 ou 8 sous-unités glucopyranose liées en α-(1,4), substituées ou non. Une cyclodextrine sous forme polymérisée, réticulée ou non, pouvant être avantageusement utilisée pour la mise en oeuvre de ladite étape i) est par exemple du type de celle obtenue par polymérisation de monomères de bêta-cyclodextrine avec de l'épichlorhydrine ou un polyacide.

Les mélanges de cyclodextrines avantageusement employés pour la mise en oeuvre de ladite étape i) du procédé de préparation du catalyseur d'hydrocraquage mettent en oeuvre des cyclodextrines substituées ou non. Lesdits mélanges pourront, à titre d'exemple, contenir conjointement et dans des proportions variables, chacun des trois types de cyclodextrines (alpha, bêta et gamma).

L'introduction dudit composé organique, préférentiellement d'une cyclodextrine et très préférentiellement de la bêta-cyclodextrine, pour la mise en oeuvre de ladite étape i) du procédé de préparation du catalyseur d'hydrocraquage est telle que le rapport molaire {(métaux des groupes (VIII + VIB) sous forme d'oxyde présent dans phase active du catalyseur obtenu à l'issue de ladite étape iii)/composé organique} est compris entre 10 et 300 et de préférence entre 25 et 180. Les métaux des groupes VIII et VIB pris en compte pour le calcul dudit rapport molaire sont les métaux introduits pour la mise en oeuvre de ladite étape i) du procédé de préparation du catalyseur d'hydrocraquage et se trouvant sous la forme d'oxyde dans la phase active du catalyseur issu de ladite étape iii). Lesdits métaux des groupes VIII et VIB peuvent en conséquence se trouver sous la forme sulfure : ils seront sulfurés préalablement à la mise en oeuvre du procédé d'hydrocraquage décrit plus loin dans la présente description.

La mise en contact dudit composé organique avec ledit précatalyseur pour la mise en oeuvre de ladite étape

i1) respectivement avec ledit support pour la mise en oeuvre de ladite étape i2) ou de ladite étape i3) est réalisée par imprégnation, notamment par imprégnation à sec ou imprégnation en excès, préférentiellement par imprégnation à sec. Ledit composé organique est préférentiellement imprégné sur ledit précatalyseur (étape i1) respectivement sur ledit support (étape i2 ou étape i3) après solubilisation en solution aqueuse. L'imprégnation dudit composé organique sur ledit précatalyseur (étape i1) respectivement sur ledit support (étape i2 ou étape i3) est suivie d'une étape de maturation, puis d'une étape de séchage préférentiellement réalisée à une température comprise entre 50 et 200°C, très préférentiellement comprise entre 65 et 180°C et de manière encore plus préférée entre 75 et 160°C. Ladite étape de séchage est éventuellement suivie d'une étape de calcination.

Conformément à ladite étape i) du procédé de préparation du catalyseur d'hydrocraquage, le dépôt d'au moins dudit métal du groupe VIII et d'au moins dudit métal du groupe VIB sur ledit support (étape i1 ou étape i2) ou sur ledit solide comprenant ledit composé organique obtenu à l'issue de ladite première étape selon l'étape i3) peut être réalisé par toute méthode bien connue de l'Homme du métier, préférentiellement par imprégnation dudit support (étape i1 ou étape i2) ou dudit solide (étape i3) par au moins un précurseur dudit métal du groupe VIII et au moins un précurseur dudit métal du groupe VIB présents en solution. Il peut s'agir d'imprégnation à sec ou d'imprégnation en excès réalisée selon des méthodes bien connues de l'Homme du métier. De manière préférée, une imprégnation à sec est réalisée, laquelle consiste à mettre en contact ledit support (étape i1 ou étape i2) ou ledit solide (étape i3) avec au moins un précurseur dudit métal du groupe VIII et au moins un précurseur dudit métal du groupe VIB présents dans une ou plusieurs solutions, dont le volume total est égal au volume poreux du support à imprégner ou dudit solide à imprégner. La(es)dite(s) solutions contien(nen)t les précurseurs métalliques du ou des métaux du groupe VIII et du ou des métaux du groupe VIB à la concentration voulue pour obtenir la teneur souhaitée en éléments hydro-déshydrogénants dans la phase active du catalyseur. Chaque étape d'imprégnation dudit support (étape i1 ou étape i2) ou dudit solide (étape i3) par au moins un précurseur dudit métal du groupe VIII et au moins un précurseur dudit métal du groupe VIB est préférentiellement suivie d'une étape de maturation, puis d'une étape de séchage préférentiellement réalisée à une température comprise entre 50 et 200°C, très préférentiellement comprise entre 65 et 180°C et de manière encore plus préférée entre 75 et 160°C. Ladite étape de séchage est éventuellement suivie d'une étape de calcination.

Le(s)dit(s) métal(ux) du groupe VIII et le(s)dit(s) métal(ux) du groupe VIB sont mis au contact dudit support (étape i1 ou étape i2) respectivement dudit solide (étape i3) par l'intermédiaire de tout précurseur métallique soluble en phase aqueuse ou en phase organique. De manière préférée, le(s)dit(s) précurseur(s) du(es) métal(ux) du groupe VIII et le(s)dit(s) précurseur(s) du(es) métal(ux) du groupe VIB sont introduits en solution aqueuse.

Les précurseurs du(es) métal(ux) du groupe VIII sont avantageusement choisis parmi les oxydes, les hydroxydes, les hydroxycarbonates, les carbonates et les nitrates des éléments du groupe VIII. L'hydroxycarbonate de nickel, le nitrate de nickel, le nitrate de cobalt, le carbonate de nickel ou l'hydroxyde de nickel, le carbonate de cobalt ou l'hydroxyde de cobalt sont utilisés de manière préférée.

Les précurseurs de molybdène utilisés pour la mise en oeuvre de ladite étape i) du procédé de préparation du catalyseur d'hydrocraquage sont bien connus de l'homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique ($H_3PMo_{12}O_{40}$) et leurs sels, et éventuellement l'acide silicomolybdique ($H_4SiMo_{12}O_{40}$) et les sels correspondants. Les sources de molybdène peuvent également être tout hétéropolycomposé de type Keggin, Keggin lacunaire, Keggin substitué, Dawson, Anderson, Strandberg, par exemple. On utilise de préférence le trioxyde de molybdène et les hétéropolyanions de type Strandberg, Keggin, Keggin lacunaire ou Keggin substitué connus de l'Homme du métier.

Les précurseurs de tungstène utilisés pour la mise en oeuvre de ladite étape i) du procédé de préparation du catalyseur d'hydrocraquage sont bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique ($H_3PW_{12}O_{40}$) et leurs sels, et éventuellement l'acide silicotungstique ($H_4SiW_{12}O_{40}$) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué connus de l'Homme du métier.

Le procédé de préparation du catalyseur d'hydrocraquage mis en oeuvre dans le procédé d'hydrocraquage selon l'invention comporte plusieurs modes de mise en oeuvre.

Un premier mode de mise en oeuvre consiste, conformément à ladite étape i1) du procédé de préparation dudit catalyseur, à mettre en contact au moins un précatalyseur comprenant au moins un métal du groupe VIII, au moins un métal du groupe VIB et au moins un support acide formé d'au moins un oxyde avec au moins un composé organique formé d'au moins un oligosaccharide cyclique composé d'au moins 6 sous-unités glucopyranose liées en $\alpha$-(1,4). Selon l'invention, ledit premier mode de mise en oeuvre est une préparation dite "post-imprégnation".

Selon une première variante de réalisation de ladite étape i1), le précatalyseur est préparé en procédant au dépôt d'au moins dudit métal du groupe VIII et d'au moins dudit métal du groupe VIB sur ledit support par toute méthode

connue de l'Homme du métier, préférentiellement par imprégnation à sec, imprégnation en excès ou encore par dépôt-précipitation selon des méthodes bien connues de l'Homme du métier. Le dépôt des précurseurs des métaux des groupes VIB et VIII peut être effectué par une ou plusieurs imprégnations. Une étape de maturation est réalisée à la suite de chaque étape d'imprégnation desdits métaux des groupes VIII et VIB. Une étape de séchage intermédiaire, par exemple effectuée à une température comprise entre 50 et 200°C et préférentiellement comprise entre 75 et 160°C, est avantageusement réalisée entre deux imprégnations successives. Après le dépôt de la quantité totale voulue en métaux des groupes VIB et VIII, le solide imprégné obtenu est séché, par exemple à une température comprise entre 50 et 200°C et préférentiellement comprise entre 75 et 160°C, et avantageusement calciné à une température comprise entre 350 et 600°C, préférentiellement entre 410 et 510°C, de manière à obtenir ledit précatalyseur.

Selon une deuxième variante de réalisation de ladite étape i1), le précatalyseur est un catalyseur comprenant au moins un métal du groupe VIII, au moins un métal du groupe VIB et au moins un support acide formé d'au moins un oxyde, ledit catalyseur ayant été régénéré pour éliminer le coke formé à la suite du fonctionnement dudit catalyseur dans une unité réactionnelle. La régénération du catalyseur usé est réalisée par combustion du coke, généralement en contrôlant l'exotherme lié à la combustion du coke. Le catalyseur régénéré utilisé comme précatalyseur est ensuite mis au contact d'au moins un composé organique formé d'au moins un oligosaccharide cyclique composé d'au moins 6 sous-unités glucopyranose liées en $\alpha$-(1,4).

La mise en contact subséquente dudit composé organique avec ledit précatalyseur obtenu selon la première ou la deuxième variante de réalisation de ladite étape i1) est suivie d'une étape de maturation puis d'au moins une étape de séchage, laquelle est réalisée dans les mêmes conditions que celles opérées pour ladite étape ii), et enfin d'au moins une étape de traitement thermique, de préférence d'au moins une étape de calcination, laquelle est réalisée dans les mêmes conditions que celles opérées pour ladite étape iii).

Un deuxième mode de mise en oeuvre du procédé de préparation du catalyseur d'hydrocraquage consiste, conformément à ladite étape i2), à procéder au dépôt des précurseurs desdits métaux des groupes VIII et VIB et à celui dudit composé organique, sur ledit support, par au moins une étape de co-imprégnation, préférentiellement réalisée à sec. Ledit deuxième mode de mise en oeuvre comprend la mise en oeuvre d'une ou plusieurs étapes de co-imprégnation. Il est avantageux de procéder à l'imprégnation d'une partie de la quantité totale désirée en métaux des groupes VIB et VIII avant ou après ladite étape de co-imprégnation. Chacune des étapes de co-imprégnation est suivie d'une étape de maturation puis d'au moins une étape de séchage et éventuellement d'au moins une étape de calcination. La dernière étape de dépôt des précurseurs des métaux des groupes VIII et VIB et/ou dudit composé organique de manière à obtenir le catalyseur d'hydrocraquage mis en oeuvre dans le procédé selon invention, de préference l'étape de co-imprégnation lorsque ledit deuxième mode de mise en oeuvre ne comprend comme étape d'imprégnation qu'une étape de co-imprégnation, est suivie d'au moins une étape de séchage, laquelle est réalisée dans les mêmes conditions que celles opérées pour ladite étape ii), et enfin d'au moins une étape de traitement thermique, de préférence une étape de calcination, laquelle est réalisée dans les mêmes conditions que celles opérées pour ladite étape iii).

Un troisième mode de mise en oeuvre du procédé de préparation du catalyseur d'hydrocraquage consiste, conformément à ladite étape i3), à mettre en contact au moins ledit support avec au moins un composé organique formé d'au moins un oligosaccharide cyclique composé d'au moins 6 sous-unités glucopyranose liées en $\alpha$-(1,4) puis à mettre en contact ledit support imprégné dudit composé organique avec au moins un précurseur d'au moins dudit métal du groupe VIII et au moins un précurseur d'au moins dudit métal du groupe VIB. La première étape de mise en contact d'au moins dudit support avec ledit composé organique est préférentiellement immédiatement suivie d'une étape de maturation puis d'au moins une étape de séchage et éventuellement d'au moins une étape de calcination avant une deuxième étape de mise en contact du solide issu de ladite première étape avec les précurseurs des métaux des groupes VIII et VIB. De manière avantageuse, ladite première étape est suivie de plusieurs étapes d'imprégnation des précurseurs des métaux des groupes VIB et VIII. La préparation du catalyseur conformément audit troisième mode se termine par au moins une étape de séchage, laquelle est réalisée dans les mêmes conditions que celles opérées pour ladite étape ii), et enfin au moins une étape de traitement thermique, de préférence une étape de calcination, laquelle est réalisée dans les mêmes conditions que celles opérées pour ladite étape iii).

Selon un mode particulier de mise en oeuvre du procédé de préparation du catalyseur d'hydrocraquage, une partie de la quantité totale des métaux des groupes VIB et/ou VIII présents dans la phase active du catalyseur d'hydrocraquage est introduite au moment de la mise en forme du support. En particulier, le(s)dit(s) métal(ux) du groupe VIB est(sont) introduit(s) au moment de la mise en forme dudit support dans une quantité telle qu'au plus 10% poids, de préférence au plus 5% poids, du(es)dit(s) métal(ux) du groupe VIB présent(s) dans la phase active du catalyseur sont introduits au moment de la mise en forme, le reste de la quantité en métal(ux) du groupe VIB étant introduit au cours de la mise en oeuvre de ladite étape i) du procédé de préparation du catalyseur d'hydrocraquage. De manière avantageuse, le(s) métal(ux) du groupe VIB est(sont) introduit(s) en même temps que le(s) métal(ux) du groupe VIII.

Selon un autre mode particulier de mise en oeuvre du procédé de préparation du catalyseur d'hydrocraquage, l'ensemble de la quantité des métaux des groupes VIB et VIII est introduit, après la mise en forme et la calcination du support, au cours de la mise en oeuvre de ladite étape i) du procédé de préparation dudit catalyseur d'hydrocraquage.

De manière avantageuse, le(s) métal(ux) du groupe VIB est(sont) introduit(s) en même temps que le(s) métal(ux) du groupe VIII.

Le phosphore éventuellement présent dans la phase active du catalyseur d'hydrocraquage est introduit soit en totalité au cours de l'étape i) du procédé de préparation dudit catalyseur soit en partie au cours de la mise en forme du support, le reste étant alors introduit au cours de ladite étape i) du procédé de préparation dudit catalyseur. De manière très préférée, le phosphore est introduit, par imprégnation, en totalité ou au moins en partie au cours de ladite étape i) du procédé de préparation dudit catalyseur et de manière encore plus préférée, il est introduit en mélange avec l'un au moins des précurseurs des métaux des groupes VIB et/ou VIII au cours de l'une des étapes choisies parmi les étapes i1), i2) et i3). L'imprégnation du phosphore au cours de ladite étape i) du procédé de préparation dudit catalyseur, en particulier lorsque le phosphore est introduit seul (c'est-à-dire en l'absence de tout autre élément de la phase active du catalyseur), est suivie d'une étape de séchage à une température comprise entre 50 et 200°C, préférentiellement entre 65 et 180°C et plus préférentiellement entre 75 et 160°C. La source de phosphore préférée est l'acide orthophosphorique $H_3PO_4$, toutefois ses sels et esters comme les phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg bien connus de l'Homme du métier.

Le(s) dopant(s) éventuellement présent(s) dans la phase active du catalyseur, sous la forme de bore et/ou de fluor, est(sont) introduit(s) soit en en totalité au cours de l'étape i) du procédé de préparation dudit catalyseur d'hydrocraquage soit en totalité au cours de la préparation du support et préférentiellement au cours de la mise en forme du support soit encore en partie au cours de la préparation du support, le reste étant alors introduit au cours de ladite étape i) du procédé de préparation dudit catalyseur d'hydrocraquage. De manière très préférée, le dopant est introduit, par imprégnation, en totalité ou en partie au cours de ladite étape i) du procédé de préparation du catalyseur d'hydrocraquage et de manière encore plus préférée, il est introduit en mélange avec l'un au moins des précurseurs des métaux des groupes VIB et/ou VIII au cours de l'une des étapes choisies parmi les étapes i1), i2) et i3). L'imprégnation du dopant au cours de ladite étape i) du procédé de préparation du catalyseur d'hydrocraquage, en particulier lorsque le dopant est introduit seul (c'est-à-dire en l'absence de tout autre élément de la phase active du catalyseur), est suivie d'une étape de séchage à une température comprise entre 50 et 200°C, préférentiellement entre 65 et 180°C et plus préférentiellement entre 75 et 160°C. La source de bore peut être l'acide borique, de préférence l'acide orthoborique $H_3BO_3$, le biborate ou le pentaborate d'ammonium, l'oxyde de bore, les esters boriques. Le bore peut être introduit par exemple par une solution d'acide borique dans un mélange eau/alcool ou encore dans un mélange eau/éthanolamine. Les sources de fluor qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé par réaction entre un composé organique et l'acide fluorhydrique. Le fluor peut être introduit par exemple par imprégnation d'une solution aqueuse d'acide fluorhydrique, ou de fluorure d'ammonium ou encore de bifluorure d'ammonium.

Ladite étape ii) de séchage, mise en oeuvre pour la préparation du catalyseur d'hydrocraquage, est réalisée à une température comprise entre 50 et 200°C, de préférence entre 65 et 180°C et de manière encore plus préférée entre 75 et 160°C. Ladite étape ii) est préférentiellement réalisée pendant une durée comprise entre 1 et 20 heures. Ladite étape de séchage permet d'évacuer le(s) solvant(s) utilisé(s) au cours de la mise en oeuvre de ladite étape i).

Ladite étape de séchage est suivie d'au moins une étape de traitement thermique iii) pour décomposer ledit composé organique formé d'au moins un oligosaccharide cyclique composé d'au moins 6 sous-unités glucopyranose liées en $\alpha$-(1,4). Ledit traitement thermique est réalisé à une température comprise entre 350 et 600°C, de préférence entre 370 et 550°C et de façon encore plus préférée entre 410 et 510°C. Il est avantageusement réalisé sous air ou sous gaz inerte dans tout équipement connu de l'Homme de l'art pour réaliser ce type de traitement thermique. De manière préférée, le traitement thermique est réalisé sous air et il s'agit donc d'une calcination. Le traitement thermique est réalisé pendant une durée avantageusement comprise entre 1 et 6 heures, et de manière préférée entre 1 et 3 heures.

Le catalyseur, obtenu à l'issue de ladite étape iii), après mise en oeuvre des étapes i) et ii) selon le procédé de préparation décrit ci-dessus, se trouve à l'état oxyde.

Le procédé de préparation du catalyseur d'hydrocraquage utilisé dans le procédé d'hydrocraquage selon l'invention comprend au moins une étape de sulfuration iv) de sorte que la phase active du catalyseur se présente sous forme sulfure en vue de la mise en oeuvre dudit catalyseur dans le procédé d'hydrocraquage tel que décrit plus bas dans la présente description. Ladite étape de sulfuration est effectuée après la mise en oeuvre de ladite étape iii). Ce traitement d'activation par sulfuration est bien connu de l'Homme du métier et peut être effectué par toute méthode connue de l'Homme du métier. Ladite étape de sulfuration est réalisée par la mise en contact dudit catalyseur issu de ladite étape iii) du procédé de préparation décrit ci-dessus dans la présente description avec au moins un composé organique soufré décomposable et générateur d'$H_2S$ ou par la mise en contact direct dudit catalyseur avec un flux gazeux d'$H_2S$, par exemple situé dans l'hydrogène. Ledit composé organique soufré est avantageusement choisi parmi les alkyldisulfures tels que le disulfure de diméthyle (DMDS), les alkylsulfures tel que le sulfure de diméthyle, les mercaptans tel que le n-butylmercaptan, les composés polysulfures de type tertiononylpolysulfure tels que le TPS-37 ou le

TPS-54 commercialisés par la société ARKEMA, ou tout autre composé connu de l'homme du métier permettant d'obtenir une bonne sulfuration du catalyseur. Ladite étape iv) de sulfuration peut être réalisée *in situ* (c'est-à-dire après chargement du catalyseur dans l'unité réactionnelle du procédé d'hydrocraquage selon l'invention décrit plus bas dans la présente description) ou *ex situ* (c'est-à-dire avant chargement du catalyseur dans l'unité réactionnelle du procédé d'hydrocraquage selon l'invention décrit plus bas dans la présente description) à une température comprise entre 200 et 600°C et plus préférentiellement entre 300 et 500°C.

Le catalyseur, issu de ladite étape iv), se trouve avant la mise en oeuvre du procédé d'hydrocraquage selon l'invention, au moins partiellement sous forme sulfurée. Il peut également comprendre une phase métallique oxyde, qui n'a pas été transformée lors de ladite étape de sulfuration iv). Ledit catalyseur est entièrement débarrassé dudit composé organique formé d'au moins un oligosaccharide cyclique composé d'au moins 6 sous-unités glucopyranose liées en $\alpha$-(1,4).

Le procédé d'hydrocraquage selon l'invention couvre les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 10 MPa. Le procédé d'hydrocraquage selon l'invention est effectué en présence d'au moins un catalyseur obtenu à l'issue de ladite étape iv) dudit procédé de préparation décrit ci-dessus et mettant en oeuvre ledit oligosaccharide cyclique composé d'au moins 6 sous-unités glucopyranose liées en $\alpha$-(1,4). Le procédé d'hydrocraquage selon l'invention peut être réalisée en une ou deux étape(s), indépendamment de la pression à laquelle ledit procédé est mis en oeuvre. Il est effectué en présence d'un ou plusieurs, généralement deux, catalyseur(s) d'hydrocraquage obtenu(s) selon le procédé de préparation décrit ci-dessus, dans une ou plusieurs unité(s) réactionnelle(s) équipée(s) de un ou plusieurs réacteur(s).

Selon un premier mode de réalisation du procédé d'hydrocraquage selon l'invention, le(s) catalyseur(s) d'hydrocraquage obtenu(s) à l'issue de ladite étape iv) dudit procédé de préparation mettant en oeuvre ledit oligosaccharide cyclique est(sont) avantageusement utilisé(s) seul(s) ou en enchaînement, en un seul ou plusieurs lits catalytiques, en lit fixe ou en lit bouillonnant, dans un ou plusieurs réacteurs, dans un schéma d'hydrocraquage dit en "une étape", avec ou sans recyclage liquide de la fraction non convertie, éventuellement en association avec un catalyseur d'hydroraffinage situé en amont du ou des catalyseurs d'hydrocraquage. Le lit bouillonnant s'opère avec retrait de catalyseur usé et ajout journalier de catalyseur neuf afin de conserver une activité du catalyseur stable.

Selon un deuxième mode de réalisation du procédé d'hydrocraquage selon l'invention, le(s) catalyseur(s) d'hydrocraquage obtenu(s) à l'issue de ladite étape iv) dudit procédé de préparation mettant en oeuvre ledit oligosaccharide cyclique est(sont) avantageusement utilisé(s), seul(s) ou en enchaînement, en un seul ou en plusieurs lits catalytiques, dans l'une et/ou l'autre étape d'un schéma d'hydrocraquage dit en "deux étapes". Le schéma "deux étapes" est un schéma pour lequel il existe une séparation intermédiaire des effluents entre les deux zones réactionnelles. Ce schéma peut s'opérer avec ou sans recyclage liquide de la fraction non convertie issue de la première zone réactionnelle ou de la seconde zone réactionnelle. La première zone réactionnelle opère en lit fixe ou en lit bouillonnant. Dans le cas particulier où le ou les catalyseurs d'hydrocraquage obtenu(s) selon le procédé de préparation mettant en oeuvre ledit oligosaccharide cyclique seraient placés dans la première zone réactionnelle, ils seraient placés de manière préférée en association avec un catalyseur d'hydroraffinage situé en amont desdits catalyseurs.

***<u>Procédé d'hydrocraquage dit en "une étape"</u>***

L'hydrocraquage dit en "une étape", comporte en premier lieu et de façon générale un hydroraffinage poussé qui a pour but de réaliser une hydrodéazotation et une désulfuration poussées de la charge avant que celle-ci ne soit envoyée sur le ou les catalyseurs d'hydrocraquage obtenu(s) selon le procédé de préparation mettant en oeuvre ledit oligosaccharide cyclique. Ledit procédé d'hydrocraquage en une étape est particulièrement avantageux lorsque le(s)dit(s) catalyseur(s) d'hydrocraquage comprenne(nt) un support comportant des cristaux de zéolithe. Cet hydroraffinage poussé de la charge n'entraîne qu'une conversion limitée de la charge, en fractions plus légères, qui reste insuffisante et doit donc être complétée sur le(s) catalyseur(s) d'hydrocraquage plus actif(s), obtenu(s) selon le procédé de préparation mettant en oeuvre ledit oligosaccharide cyclique. Cependant, il est à noter qu'aucune séparation des effluents n'intervient entre les différents lits catalytiques : la totalité de l'effluent en sortie du lit catalytique d'hydroraffinage est injectée sur le ou les lit(s) catalytique(s) contenant le(s)dit(s) catalyseur(s) d'hydrocraquage obtenu(s) selon le procédé de préparation mettant en oeuvre ledit oligosaccharide cyclique puis une séparation des produits formés est réalisée. Cette version de l'hydrocraquage, possède une variante qui présente un recyclage de la fraction non convertie vers au moins l'un des lits catalytiques d'hydrocraquage en vue d'une conversion plus poussée de la charge.

Le procédé d'hydrocraquage en une étape selon l'invention met par exemple en oeuvre un catalyseur d'hydroraffinage placé en amont d'un catalyseur d'hydrocraquage supporté sur une alumine contenant des cristaux zéolithiques et dont la phase active est à base de nickel et de molybdène, ledit catalyseur d'hydrocraquage étant obtenu par le procédé de préparation mettant en oeuvre ledit oligosaccharide cyclique. Le procédé d'hydrocraquage en une étape

selon l’invention peut encore avantageusement être mis en oeuvre en présence d’un catalyseur d’hydroraffinage placé en amont d’un premier catalyseur d’hydrocraquage supporté sur une silice-alumine et dont la phase active est à base de nickel et de tungstène et d’un deuxième catalyseur d’hydrocraquage supporté sur une alumine contenant des cristaux zéolithiques et dont la phase active est à base de nickel et de molybdène, lesdits catalyseurs d’hydrocraquage étant obtenus selon le procédé de préparation mettant en oeuvre ledit oligosaccharide cyclique.

***Procédé d’hydrocraquage dit en "deux étapes"***

L’hydrocraquage dit en "deux étapes", comporte une première étape qui a pour objectif, comme dans le procédé "une étape", de réaliser l’hydroraffinage de la charge, mais aussi d’atteindre une conversion de cette dernière de l’ordre en général de 40 à 60%. L’effluent issu de la première étape subit ensuite une séparation, généralement par distillation, appelée le plus souvent séparation intermédiaire, qui a pour objectif de séparer les produits de conversion de la fraction non convertie. Dans la deuxième étape du procédé d’hydrocraquage en deux étapes selon l’invention, seule la fraction de la charge non convertie lors de la première étape, est traitée. Cette séparation permet au procédé d’hydrocraquage deux étapes selon l’invention d’être plus sélectif en distillat moyen (kérosène + diesel) que le procédé en une étape selon l’invention. En effet, la séparation intermédiaire des produits de conversion évite leur "sur-craquage" en naphta et gaz dans la deuxième étape sur le(s) catalyseur(s) d’hydrocraquage obtenu(s) selon le procédé de préparation décrit plus haut dans la présente description. Par ailleurs, il est à noter que la fraction non convertie de la charge traitée dans la deuxième étape contient en général de très faibles teneurs en $NH_3$ ainsi qu’en composés azotés organiques, en général moins de 20 ppm poids voire moins de 10 ppm poids.

Selon un mode préféré de réalisation du procédé d’hydrocraquage en deux étapes selon l’invention, ladite première étape est mise en oeuvre en présence d’un catalyseur d’hydroraffinage et d’un catalyseur d’hydrocraquage, ledit catalyseur d’hydrocraquage étant avantageusement supporté sur une silice-alumine contenant des cristaux zéolithiques et dont la phase active est à base de nickel et de tungstène, et ladite deuxième étape est mise en oeuvre en présence d’un catalyseur d’hydrocraquage de composition différente de celui présent pour la mise en oeuvre de ladite première étape, par exemple un catalyseur supporté sur une alumine contenant des cristaux zéolithiques et dont la phase active est à base de nickel et de molybdène, lesdits catalyseurs d’hydrocraquage étant obtenus selon le procédé de préparation mettant en oeuvre ledit oligosaccharide cyclique.

***Conditions opératoires***

Le procédé d’hydrocraquage selon l’invention est mis en oeuvre dans des conditions opératoires (température, pression, taux de recyclage d’hydrogène, vitesse spatiale horaire) pouvant être très variables en fonction de la nature de la charge, de la qualité des produits désirés et des installations dont dispose le raffineur. Conformément au procédé d’hydrocraquage selon l’invention, ledit catalyseur d’hydrocraquage est avantageusement mis en contact, en présence d’hydrogène, avec ladite charge hydrocarbonée à une température supérieure à 200°C, souvent comprise entre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale (débit volumique de charge divisé par le volume du catalyseur) étant comprise entre 0,1 et 20h$^{-1}$ et de préférence entre 0,1 et 6h$^{-1}$, de préférence entre 0,2 et 3h$^{-1}$, et la quantité d’hydrogène introduite est telle que le rapport volumique litre d’hydrogène / litre d’hydrocarbure soit compris entre 80 et 5000 l/l et le plus souvent entre 100 et 2000 l/l.

Ces conditions opératoires utilisées dans le procédé d’hydrocraquage selon l’invention permettent généralement d’atteindre des conversions par passe, en produits ayant des points d’ébullition d’au plus 370°C et avantageusement d’au plus 340°C, supérieures à 15% et de manière encore plus préférée comprises entre 20 et 95%.

Les exemples qui suivent illustrent l’invention sans toutefois en limiter la portée.

**EXEMPLES**

Exemple 1 : Préparation des catalyseurs C1 (non conforme) et C2 (conforme)

Deux catalyseurs d’hydrocraquage de formulation NiMo/silice-alumine ont été préparés à partir d’un support sous forme d’extrudés constitué d’une silice-alumine de type SIRALOX commercialisée par SASOL avec une teneur pondérale en silice de 25 %. Ladite silice-alumine présente un volume poreux de 0,7 ml/g et une surface spécifique de 315 m$^2$/g. Les précurseurs métalliques utilisés pour la préparation des catalyseurs C1 et C2 sont l’heptamolybdate d’ammonium (HMA) et le nitrate de nickel $Ni(NO_3)_2$ ; ces composés sont préalablement solubilisés à l’aide d’un montage à reflux pendant 2h à 90°C. La solution limpide obtenue a ensuite été concentrée par évaporation de l’eau afin d’atteindre le volume d’imprégnation, puis elle a été imprégnée à sec à température ambiante sur la silice alumine. Les concentrations en précurseurs métalliques dans la solution d’imprégnation sont ajustées de manière à déposer sur le support de silice-alumine les teneurs pondérales en Ni et Mo souhaitées. Après l'étape d'imprégnation à sec, les extrudés sont laissés à maturer dans une enceinte fermée saturée en eau, pendant une nuit puis ils sont séchés en étuve à 120°C pendant 24 h. On obtient alors un précatalyseur catalytique qui est divisé en 2 lots :

- le premier lot a été calciné à 450°C pendant 2h sous air en lit fixe traversé pour conduire au catalyseur calciné **C1** (non conforme). La composition finale du catalyseur C1, exprimée sous forme oxyde, est la suivante : NiO = 3,6 % poids, $MoO_3$ = 20% poids. Le rapport molaire Ni/Mo est égal à 0,35.
- le second lot est imprégné à sec avec une solution aqueuse contenant de la β-cyclodextrine (SIGMA ALDRICH, pureté de 98%) avec un rapport molaire (Ni + Mo) / β-cyclodextrine de 30 jusqu'à apparition de l'humidité naissante, ce qui montre que la porosité du précurseur catalytique a été remplie de la solution contenant la β-cyclodextrine. Ensuite, une maturation de 3h est réalisée suivie d'un séchage à 120°C pendant 1 h puis d'une calcination à 450°C pendant deux heures. Le catalyseur ainsi obtenu est le catalyseur **C2** conforme à l'invention. La composition du catalyseur C2 est identique à celle du catalyseur C1.

<u>Exemple 2 : Préparation des catalyseurs C3 (non conforme) et C4 (conforme)</u>

Deux catalyseurs d'hydrocraquage de formulation NiMoP/(alumine + cristaux zéolithiques) ont été préparés. Le support est constitué d'alumine gamma contenant 19,2% poids de zéolithe Y (% poids ramené au support) ayant un rapport atomique Si/Al égal à 15. L'alumine présente un volume poreux égal à 0,62 ml/g et une surface spécifique égale à 400 $m^2/g$. Les précurseurs métalliques utilisés pour la préparation des catalyseurs C3 et C4 sont $MoO_3$, $Ni(OH)_2$ et $H_3PO_4$ ; ces composés sont préalablement solubilisés à l'aide d'un montage à reflux pendant 2 heures à 90°C. La solution limpide obtenue a ensuite été concentrée par évaporation de l'eau afin d'atteindre le volume d'imprégnation, puis elle a été imprégnée à sec à température ambiante sur le support (alumine + cristaux zéolithiques). Les concentrations en précurseurs métalliques dans la solution d'imprégnation sont ajustées de manière à déposer sur le support les teneurs pondérales en Ni, Mo et P souhaitées. Après l'étape d'imprégnation à sec, les extrudés sont laissés à maturer dans une enceinte fermée saturée en eau, pendant une nuit puis ils sont séchés en étuve à 120°C pendant 24 h. On obtient alors un précatalyseur catalytique qui est divisé en 2 lots :

- le premier lot a été calciné à 450°C pendant 2h sous air en lit fixe traversé pour conduire au catalyseur **C3** (non conforme). La composition finale du catalyseur C3, exprimée sous forme oxyde, est la suivante : NiO = 3,5 % poids, $MoO_3$ = 18,5% poids, $P_2O_5$ = 4,2% poids. Le rapport molaire Ni/Mo est égal à 0,37 et le rapport molaire P/Mo est égal à 0,46.
- le second lot est imprégné à sec avec une solution aqueuse contenant de la β-cyclodextrine (SIGMA ALDRICH, pureté de 98%) avec un rapport molaire (Ni + Mo) / β-cyclodextrine de 30 jusqu'à l'apparition de l'humidité naissante, ce qui montre que la porosité du précurseur catalytique a été remplie de la solution contenant la β-cyclodextrine. Ensuite, une maturation de 3h est réalisée suivie d'un séchage à 125°C pendant 2 h puis d'une calcination à 450°C pendant deux heures. Le catalyseur ainsi obtenu est le catalyseur **C4** conforme à l'invention. La composition du catalyseur C4 est identique à celle du catalyseur C3.

<u>Exemple 3 : Evaluation en hydrogénation du toluène en présence d'aniline des catalyseurs C1 et C3 (non-conformes) et C2 et C4 (conformes).</u>

Le test d'Hydrogénation du Toluène en présence d'Aniline (test "HTA") a pour but d'évaluer l'activité HYDrogénante (HYD) des catalyseurs sulfurés supportés en présence d'$H_2S$ et sous pression d'hydrogène. L'isomérisation et le craquage qui caractérisent la fonction acide d'un catalyseur d'hydrocraquage sont inhibés par la présence de $NH_3$ (suite à la décomposition de l'aniline) de sorte que le test HTA permette d'apprécier spécifiquement le pouvoir hydrogénant de chacun des catalyseurs testés. L'aniline et/ou $NH_3$ vont ainsi réagir via une réaction acide base avec les sites acides du support. Chaque test HTA a été réalisé sur une unité comportant plusieurs microréacteurs en parallèle. Pour chaque test "HTA", la même charge est utilisée pour la sulfuration du catalyseur et pour la phase de test catalytique proprement dite. Avant chargement, le catalyseur est conditionné : il est trié pour que la longueur des extrudés soit comprise entre 2 et 4 mm. 4 $cm^3$ de catalyseur trié mélangés avec 4 $cm^3$ de carborundum (SiC, 500 μm) sont chargés dans les réacteurs.

La charge utilisée pour ce test est la suivante :

- Toluène 20 % poids,
- Cyclohexane 73,62 % poids,
- DMDS (DiMéthylDiSulfure) 5,88 % poids (3,8 % poids en S),
- Aniline 0,5 % poids (750 ppm N)

Le catalyseur est chargé dans le réacteur sous sa forme oxyde, non active. L'activation (sulfuration) est effectuée dans l'unité avec cette même charge. C'est l'$H_2S$ qui, formé suite à la décomposition du DMDS, sulfure la phase oxyde. La quantité d'aniline présente dans la charge a été choisie pour obtenir, après décomposition, environ 750 ppm de $NH_3$.

Les conditions opératoires du test d'hydrogénation du toluène sont les suivantes :

- P = 6MPa,
- WH = 2 $h^{-1}$ (flux de charge = 8 $cm^3/h$),
- $H_2$/HC = 450 Nl/l, (flux $H_2$ = 3,6 Nl/l),
- T = 350°C.

On évalue le pourcentage de toluène converti et, en faisant l'hypothèse d'un ordre 1 de la réaction, on en déduit l'activité par la relation suivante :

$$AH_{ordre.1} = \ln \frac{100}{(100 - \%HYD_{toluène})}$$

avec $\%HYD_{toluéne}$ = pourcentage de toluène converti.

L'activité du catalyseur C1 est prise pour référence et est égale à 100. Les résultats obtenus sont rassemblés dans le tableau 1.

Tableau 1 : Activité hydrogénante relative des catalyseurs C1, C2, C3 et C4.

| Catalyseur | Catalyseur de départ | Additif organique | Traitement thermique après ajout de l'additif organique | Activité hydrogénante (base 100 pour le catalyseur C1) |
|---|---|---|---|---|
| C1 non-conforme (NiMo sur Siralox) | - | - | - | 100 |
| C2 conforme (NiMo sur Siralox) | C1 | β-cyclodextrine | Séchage 125°C Calcination 450°C | 121 |
| C3 non-conforme (NiMoP sur Alumine + zéolithe) | - | - | - | 114 |
| C4 conforme (NiMoP sur Alumine + zéolithe) | C2 | β-cyclodextrine | Séchage 125°C Calcination 450°C | 132 |

Les résultats figurant dans le tableau 1 démontrent que les catalyseurs C2 et C4 préparés en présence de β-cyclodextrine présentent une activité hydrogénante sensiblement améliorée par rapport à celle des catalyseurs C1 respectivement C3 préparés en l'absence de β-cyclodextrine. L'amélioration de l'activité hydrogénante favorise l'amélioration de la sélectivité des catalyseurs C2 et C4 envers les distillats moyens qui sont les produits recherchés.

Exemple 4 : Evaluation en hydrocraquage doux de DSV des catalyseurs C1 (non conforme) et C2 (conforme)

La charge utilisée est une charge de type distillats sous vide "DSV" dont les caractéristiques principales sont reprises dans le tableau 2.

Tableau 2 : Caractéristiques du DSV utilisé pour l'hydrocraquage doux.

| Charge | DSV |
|---|---|
| Densité 15/4 ($g/cm^3$) | 0,897 |
| S organique (% poids) | 0,2104 |
| N organique (ppm) | 399 |
| TMP* (°C) | 467 |

(suite)

| Charge | DSV |
|---|---|
| % volume de composés ayant un point d'ébullition inférieur à 370°C | 13,2 |
| * : **Température Moyenne Pondérée = $\frac{1T_{5\%} + 2T_{50\%} + 4T_{95\%}}{7}$** avec $T_{x\%}$ correspondant à la température d'ébullition des x% poids de composés hydrocarbonés présents dans la coupe liquide. | |

Une fraction d'extrudés des catalyseurs C1 et C2 de longueur comprise entre 2 et 4 mm est successivement testée. On charge 4 $cm^3$ du catalyseur C1 sous forme oxyde puis du catalyseur C2 sous forme oxyde dans le réacteur. L'activation (sulfuration) est effectuée dans l'unité réactionnelle avant démarrage du test avec une charge dite de sulfuration (gazole de distillation directe + 2 % poids de DMDS). C'est l'$H_2S$ qui, formé suite à la décomposition du DMDS, sulfure les catalyseurs C1 et C2.

Les conditions opératoires appliquées lors du test sont les suivantes :

- P=6MPa,
- VVH = 0,6 $h^{-1}$,
- $H_2/HC_{sortie}$ = 480 Nl/l,
- T = 380°C

Les résultats catalytiques sont rassemblés dans le tableau 3. La conversion brute correspond à la conversion de la fraction hydrocarbonée ayant un point d'ébullition supérieur à 370°C présente dans la charge DSV initiale vers des hydrocarbures ayant un point d'ébullition inférieur à 370°C et présents dans l'effluent. La conversion brute est déterminée comme étant égale à la fraction pondérale constituée par les hydrocarbures ayant un point d'ébullition inférieur à 370°C et présents dans l'effluent.

Tableau 3 : Performances catalytiques obtenues pour C1 et C2 en hydrocraquage doux.

| | Conversion brute (%) | Soufre Total dans l'effluent (ppm) |
|---|---|---|
| C1 (non conforme) | 32 | 60 |
| C2 (conforme) | 35 | 41 |

Le catalyseur C2 préparé en présence de β-cyclodextrine conduit non seulement à un gain en conversion de 3 % mais également à une diminution sensible de la quantité de soufre par rapport au catalyseur C1 préparé en l'absence de β-cyclodextrine (non conforme). Ces résultats montrent qu'en plus d'un gain en hydrogénation illustré à l'exemple 3, le catalyseur C2 permet d'obtenir des gains en activité intéressants en hydrocraquage doux par rapport à un catalyseur conventionnel. Le catalyseur C2 est plus actif que le catalyseur C1.

Exemple 5: Evaluation en hydrocraquage de DSV Haute Pression des catalyseurs C3 (non conforme) et C4 (conforme).

L'unité qui a été utilisée travaille en mode "once through" (1 étape) sans recyclage liquide. L'unité réactionnelle est chargée à avec 50 $cm^3$ de catalyseur pour chaque test. La charge avant injection est maintenue à une température de 70°C dans une enceinte thermique fermée. La circulation des fluides (charge + hydrogène) dans le réacteur se fait en mode ascendant. Un strippage des recettes à l'hydrogène (débit de 20 Uh) est réalisé, et les effluents gazeux issus du séparateur gaz/liquide et du stripper sont comptabilisés et analysés par chromatographie en phase gazeuse en ligne. La charge d'activation (sulfuration) est un gazole auquel est ajouté 2% pds de diméthyldisulfure (DMDS) et 2% pds d'aniline. La charge de test est une charge DSV hydrotraitée et additivée décrite dans les tableaux 4 et 5.

Tableau 4 : Caractéristiques de la charge avant additivation.

| Charge initiale | DSV |
|---|---|
| S organique (ppm) | 12 |
| N organique (ppm) | 7,0 |
| Aromatiques (%pds) | 15,4 |
| Densité 15°C | 0,861 |

(suite)

| Charge initiale | DSV |
|---|---|
| TMP* (°C) | 438,4 |

* : Température Moyenne Pondérée = $\frac{1T_{5\%} + 2T_{50\%} + 4T_{95\%}}{7}$

avec $T_{x\%}$ la température d'ébullition des x% poids de composés hydrocarbonée présents de la coupe liquide.

On ajoute à la charge DSV initiale de l'ordre de 2,8% pds de soufre sous forme de DMDS et de l'ordre de 1250 ppm d'azote sous forme d'aniline. Le DMDS et l'aniline se décomposent dans le réacteur d'hydrocraquage pour conduire à la formation de $NH_3$ et de $H_2S$. Les caractéristiques de la charge après additivation sont données dans le Tableau 5.

Tableau 5 : Caractéristiques de la charge après additivation.

| | |
|---|---|
| Densité 15°C | 0,870 |
| Soufre (%pds) | 2,79 |
| Azote (ppm) | 1220 |
| Indice de Réfraction | 1,456 |
| Distillation | |
| Eb ≤ 150°C | 2,7 % poids |
| Eb ≤ 250°C | 9,6 % poids |
| Eb ≤ 370°C | 31,0 % poids |

Les conditions opératoires appliquées lors du test sont les suivantes :

- P = 14 MPa,
- VVH = 1 $h^{-1}$,
- $H_2/HC_{sortie}$ = 1000 Nl/l,
- T = 385°C

Le protocole de démarrage est le suivant :

- à température ambiante, le catalyseur est mouillé avec la charge d'activation (sulfuration) puis l'hydrogène est injecté avec la charge d'activation. La température est ensuite augmentée.
- en fin de palier de sulfuration à 350°C, la charge d'activation est remplacée par la charge DSV additivée et la température est ajustée à la température de réaction, soit 385°C.
- après remplacement de la charge d'activation par la charge DSV additivée, les débits de charge et d'hydrogène sont ajustés pour obtenir les valeurs souhaitées.

Grâce à ce test, une comparaison des catalyseurs C3 et C4 est obtenue par l'évaluation :

- de la conversion brute de la fraction 370°C $^+$ (composés hydrocarbonés ayant un point d'ébullition supérieur à 370°C) en 370°C $^-$ (composés hydrocarbonés ayant un point d'ébullition inférieur à 370°C) : Conversion brute en 370°C$^-$ = % poids 370°C$^-_{effluents}$

La définition de la conversion brute est similaire à celle précisée dans l'exemple 4.

- de la sélectivité brute en Distillats Moyens (Gazole + kérosène) : Sélectivité brute en distillats moyens = (%pds (150 - 370°C)$_{effluents}$) / Conversion brute en 370°C. La sélectivité brute en distillats moyens est déterminée comme étant égale à la fraction pondérale constituée par les hydrocarbures ayant un point d'ébullition compris entre 150 et 370°C présents dans les effluents divisée par la conversion brute de la fraction 370°C $^+$ en 370°C $^-$.

Les résultats sont rassemblés dans le tableau 6.

Tableau 6 : Performances catalytiques obtenues pour les catalyseurs C3 et C4 en hydrocraquage Haute Pression.

| | Conversion brute (%) | Sélectivité en Distillats Moyens (% poids) |
|---|---|---|
| C3 (non conforme) | 88 | 61 |
| C4 (conforme) | 88 | 63 |

Les résultats catalytiques montrent qu'à la température de 385°C, la conversion obtenue par les 2 catalyseurs C3 (non-conforme) et C4 (conforme) sont identiques et que la sélectivité envers les produits désirés, à savoir les distillats moyens (coupe ayant un point d'ébullition compris entre 150 et 370°C, Gazole + kérosène), est supérieure pour le catalyseur C4 préparé en présence de β-cyclodextrine. Le catalyseur C4 est donc tout aussi actif que le catalyseur C3 et est plus sélectif envers les produits recherchés que le catalyseur C3. Ce résultat est particulièrement intéressant dans le cadre d'un marché mondial en carburant qui se diésélise. Ce résultat est également parfaitement cohérent avec celui de l'exemple 3 démontrant que l'activité hydrogénante du catalyseur C4 est supérieure à celle du catalyseur C3.

## Revendications

**1.** Procédé d'hydrocraquage d'une charge hydrocarbonée dont au moins 20% volume comprend des composés ayant un point d'ébullition supérieur ou égal à 340°C, ledit procédé consistant en la mise en contact de ladite coupe hydrocarbonée avec au moins un catalyseur comprenant au moins un support acide et au moins une phase active formée d'au moins un métal du groupe VIII et d'au moins un métal du groupe VIB, ledit catalyseur étant préparé selon un procédé comprenant successivement au moins:

i) au moins l'une des étapes choisies parmi :

i1) au moins une étape de mise en contact d'au moins un précatalyseur comprenant au moins ledit métal du groupe VIII, au moins ledit métal du groupe VIB et au moins ledit support acide avec au moins un composé organique formé d'au moins un oligosaccharide cyclique composé d'au moins 6 sous-unités glucopyranose liées en α-(1,4),
i2) au moins une étape de mise en contact d'au moins dudit support acide avec au moins une solution contenant au moins un précurseur d'au moins dudit métal du groupe VIII, au moins un précurseur d'au moins dudit métal du groupe VIB et au moins un composé organique formé d'au moins un oligosaccharide cyclique composé d'au moins 6 sous-unités glucopyranose liées en α-(1,4), et
i3) au moins une première étape de mise en contact d'au moins dudit support acide avec au moins un composé organique formé d'au moins un oligosaccharide cyclique composé d'au moins 6 sous-unités glucopyranose liées en α-(1,4) suivie d'au moins une deuxième étape de mise en contact du solide acide issu de ladite première étape avec au moins un précurseur d'au moins dudit métal du groupe VIII et au moins un précurseur d'au moins dudit métal du groupe VIB ;

ii) au moins une étape de séchage,
iii) au moins une étape de traitement thermique pour décomposer ledit composé organique, et
iv) au moins une étape de sulfuration de sorte que la phase active se présente sous forme sulfure.

**2.** Procédé d'hydrocraquage selon la revendication 1 tel que ladite charge hydrocarbonée comprend des hétéroatomes choisis parmi l'azote, le soufre et le mélange de ces deux éléments.

**3.** Procédé d'hydrocraquage selon la revendication 1 ou la revendication 2 tel que ledit catalyseur comprend un ou plusieurs dopants choisi(s) parmi le phosphore, le bore et le fluor et le mélange de ces éléments.

**4.** Procédé d'hydrocraquage selon l'une des revendications 1 à 3 tel que ledit métal du groupe VIB est choisi parmi le molybdène, le tungstène et le mélange de ces deux éléments.

**5.** Procédé d'hydrocraquage selon l'une des revendications 1 à 4 tel que ledit métal du groupe VIII est choisi parmi le cobalt, le nickel et le mélange de ces deux éléments.

**6.** Procédé d'hydrocraquage selon l'une des revendications 1 à 5 tel que ledit support acide est choisi parmi les matrices

minérales poreuses acides et les matrices minérales poreuses contenant des cristaux zéolithiques.

7. Procédé d'hydrocraquage selon l'une des revendications 1 à 6 tel que ledit composé organique est choisi parmi les cyclodextrines, les cyclodextrines substituées, les cyclodextrines polymérisées et les mélange de cyclodextrines.

8. Procédé d'hydrocraquage selon la revendication 7 tel que les cyclodextrines sont l'$\alpha$-cyclodextrine, la $\beta$-cyclodextrine et la $\gamma$-cyclodextrine respectivement composée de 6, 7 et 8 sous-unités glucopyranose liées en $\alpha$-(1,4).

9. Procédé d'hydrocraquage selon la revendication 7 tel que les cyclodextrines substituées sont l'hydroxypropyl bêta-cyclodextrine et les bêta-cyclodextrines méthylées.

10. Procédé d'hydrocraquage selon l'une des revendications 1 à 9 tel que l'introduction dudit composé organique, pour la mise en oeuvre de ladite étape i) est telle que le rapport molaire {(métaux des groupes (VIII+VIB) $_{\text{sous forme d'oxyde présent dans phase active du catalyseur obtenu à l'issue de ladite étape iii}}$)/composé organique} est compris entre 10 et 300.

11. Procédé d'hydrocraquage selon l'une des revendications 1 à 10 tel que ladite étape ii) de séchage est réalisée à une température comprise entre 50 et 200°C.

12. Procédé d'hydrocraquage selon l'une des revendications 1 à 11 tel que ladite étape iii) de traitement thermique est réalisée à une température comprise entre 350 et 600°C.

13. Procédé d'hydrocraquage selon l'une des revendications 1 à 12 tel que ledit catalyseur d'hydrocraquage est mis en contact, en présence d'hydrogène, avec ladite charge hydrocarbonée à une température supérieure à 200°C, sous une pression supérieure à 1 MPa, la vitesse spatiale (débit volumique de charge divisé par le volume du catalyseur) étant comprise entre 0,1 et $20h^{-1}$ et la quantité d'hydrogène introduite est telle que le rapport volumique litre d'hydrogène / litre d'hydrocarbure soit compris entre 80 et 5000l/l.

14. Procédé d'hydrocraquage selon l'une des revendications 1 à 13 tel qu'il est réalisé en une ou deux étapes, indépendamment de la pression à laquelle ledit procédé est mis en oeuvre.

## Patentansprüche

1. Verfahren zum Hydrocracken einer Kohlenwasserstoffbeschickung, von der mindestens 20 % des Volumens Verbindungen umfasst, die einen Siedepunkt von über oder gleich 340 °C aufweisen, wobei das Verfahren in dem Inkontaktbringen des Kohlenwasserstoffschnitts mit mindestens einem Katalysator besteht, der mindestens einen sauren Träger und mindestens eine aktive Phase umfasst, die aus mindestens einem Metall der Gruppe VIII und mindestens einem Metall der Gruppe VIB gebildet ist, wobei der Katalysator durch ein Verfahren angefertigt ist, das nacheinander mindestens Folgendes umfasst:

   i) mindestens einen der Schritte, der aus Folgendem ausgewählt ist:

      i1) mindestens einen Schritt des Inkontaktbringens von mindestens einem Vorkatalysator, umfassend mindestens das Metall der Gruppe VIII, mindestens das Metall der Gruppe VIB und mindestens den sauren Träger mit mindestens einer organischen Verbindung, bestehend aus mindestens einem acyclischen Oligosaccharid, das aus mindestens 6 Glucopyranose-Untereinheiten in $\alpha$-Konfiguration (1,4) zusammengesetzt ist,
      i2) mindestens einen Schritt des Inkontaktbringens von mindestens dem sauren Träger mit mindestens einer Lösung, die mindestens einen Vorläufer von mindestens dem Metall der Gruppe VIII, mindestens einen Vorläufer von mindestens dem Metall der Gruppe VIB und mindestens eine organische Verbindung, bestehend aus mindestens einem cyclischen Oligosaccharid, das aus mindestens 6 Glucopyranose-Untereinheiten in $\alpha$-Konfiguration (1,4) zusammengesetzt ist, enthält,
      i3) mindestens einen ersten Schritt des Inkontaktbringens des sauren Trägers mit mindestens einer organischen Verbindung, bestehend aus mindestens einem cyclischen Oligosaccharid, das aus mindestens 6 Glucopyranose-Untereinheiten in $\alpha$-Konfiguration (1,4) zusammengesetzt ist, gefolgt von mindestens einem zweiten Schritt des Inkontaktbringens des sauren Feststoffs, der aus dem ersten Schritt hervorgegangen ist, mit mindestens einem Vorläufer von mindestens dem Metall der Gruppe VIII und mindestens einem

Vorläufer von mindestens dem Metall der Gruppe VIB;

ii) mindestens einen Schritt des Trocknens,
iii) mindestens einen Schritt der Wärmebehandlung zum Zersetzen der organischen Verbindung und
iv) mindestens einen Schritt des Sulfidierens, so dass die aktive Phase in Sulfidform vorliegt.

**2.** Verfahren zum Hydrocracken nach Anspruch 1, **dadurch gekennzeichnet, dass** die Kohlenwasserstoffbeschickung Heteroatome umfasst, die aus Stickstoff, Schwefel und den Mischungen dieser beiden Elemente ausgewählt sind.

**3.** Verfahren zum Hydrocracken nach Anspruch 1 oder 2, wobei der Katalysator ein oder mehrere Dotierungsmittel umfasst, das (die) aus Phosphor, Bor und Fluor und der Mischung dieser Elemente ausgesucht ist (sind).

**4.** Verfahren zum Hydrocracken nach einem der Ansprüche 1 bis 3, wobei das Metall der Gruppe VIB aus Molybdän, Wolfram und der Mischung dieser beiden Elemente ausgewählt ist.

**5.** Verfahren zum Hydrocracken nach einem der Ansprüche 1 bis 4, wobei das Metall der Gruppe VIII aus Kobalt, Nickel, und der Mischung dieser beiden Elemente ausgewählt ist.

**6.** Verfahren zum Hydrocracken nach einem der Ansprüche 1 bis 5, wobei der saure Träger aus den aus den sauren porösen anorganischen Matrizen und den porösen anorganischen Matrizen, die Zeolithkristalie enthalten, ausgewählt ist.

**7.** Verfahren zum Hydrocracken nach einem der Ansprüche 1 bis 6, wobei die organische Verbindung aus Cyclodextrinen, substituierten Cyclodextrinen, polymerisierten Cyclodextrinen und den Mischungen von den Cyclodextrinen ausgewählt ist.

**8.** Verfahren zum Hydrocracken nach Anspruch 7, wobei die Cyclodextrine $\alpha$-Cyclodextrin, $\beta$-Cyclodextrin und $\gamma$-Cyclodextrin sind, jeweils bestehend aus 6, 7 und 8 verbunden Glucopyranose-Untereinheiten, die in $\alpha$-Konfiguration (1,4) zusammengesetzt sind.

**9.** Verfahren zum Hydrocracken nach Anspruch 7, wobei die substituierten Cyclodextrine Hydroxypropyl-$\beta$-Cyclodextrin und methylierte beta-Cyclodextrine sind.

**10.** Verfahren zum Hydrocracken nach einem der Ansprüche 1 bis 9, wobei die Einführung der organischen Verbindung für die Umsetzung des Schrittes i) derart ist, dass das Molverhältnis {(Metalle der Gruppen (VIII + VIB) in Form von Oxid, das in der aktiven Phase des Katalysators vorhanden ist, der nach Abschluss des Schrittes iii erhalten ist)/organische Verbindung} zwischen 10 und 300 beträgt.

**11.** Verfahren zum Hydrocracken nach einem der Ansprüche 1 bis 10, wobei der Schritt ii) des Trocknens bei einer Temperatur zwischen 50 und 200 °C durchgeführt wird.

**12.** Verfahren zum Hydrocracken nach einem der Ansprüche 1 bis 11, wobei der Schritt iii) der Wärmebehandlung bei einer Temperatur zwischen 350 und 600 °C durchgeführt wird.

**13.** Verfahren zum Hydrocracken nach einem der Ansprüche 1 bis 12, wobei der Hydrocrackkatalysator in Gegenwart von Wasserstoff mit der Kohlenwasserstoffbeschickung bei einer Temperatur von über 200 °C unter einem Druck von mehr als 1 MPa in Kontakt gebracht wird, wobei die Raumgeschwindigkeit (Beschickungsvolumenstrom, dividiert durch das Volumen des Katalysators) zwischen 0,1 und 20 $h^{-1}$ beträgt und die Menge an eingeleitetem Wasserstoff derart ist, dass das Volumenverhältnis von Liter Wasserstoff/Liter Kohlenwasserstoff zwischen 80 und 5.000l/l beträgt.

**14.** Verfahren zum Hydrocracken nach einem der Ansprüche 1 bis 13, wobei es in einem oder zwei Schritten durchgeführt wird, unabhängig von dem Druck, bei dem das Verfahren umgesetzt wird.

## Claims

**1.** A process for hydrocracking a hydrocarbon feed at least 20% of the volume of which comprises compounds with a

boiling point of 340°C or more, said process consisting of bringing said hydrocarbon cut into contact with at least one catalyst comprising at least one acidic support and at least one active phase formed from at least one metal from group VIII and at least one metal from group VIB, said catalyst being prepared in accordance with a process comprising at least the following in succession:

i) at least one of the steps selected from:

i1) at least one step for bringing at least one pre-catalyst comprising at least said metal from group VIII, at least said metal from group VIB and at least said acidic support into contact with at least one organic compound formed from at least one cyclic oligosaccharide composed of at least 6 α-(1,4)-bonded glucopyranose subunits;
i2) at least one step for bringing at least said acidic support into contact with at least one solution containing at least one precursor of at least said metal from group VIII, at least one precursor of at least said metal from group VIB and at least one organic compound formed from at least one cyclic oligosaccharide composed of at least 6 α-(1,4)-bonded glucopyranose subunits ; and
i3) at least one first step for bringing at least said acidic support into contact with at least one organic compound formed from at least one cyclic oligosaccharide composed of at least 6 α-(1,4)-bonded glucopyranose subunits followed by at least one second step for bringing the acidic solid derived from said first step into contact with at least one precursor of at least said metal from group VIII and at least one precursor of at least said metal from group VIB;

ii) at least one drying step;
iii) at least one heat treatment step to decompose said organic compound; and
iv) at least one sulphurization step such that the active phase is in the sulphide form.

**2.** A hydrocracking process according to claim 1, in which said hydrocarbon feed comprises heteroatoms selected from nitrogen, sulphur and a mixture of said two elements.

**3.** A hydrocracking process according to claim 1 or claim 2, in which said catalyst comprises one or more dopants selected from phosphorus, boron and fluorine and a mixture of said elements.

**4.** A hydrocracking process according to one of claims 1 to 3, in which said metal from group VIB is selected from molybdenum, tungsten and a mixture of said two elements.

**5.** A hydrocracking process according to one of claims 1 to 4, in which said metal from group VIII is selected from cobalt, nickel and a mixture of said two elements.

**6.** A hydrocracking process according to one of claims 1 to 5, in which said acidic support is selected from acidic porous mineral matrices and porous mineral matrices containing zeolitic crystals.

**7.** A hydrocracking process according to one of claims 1 to 6, in which said organic compound is selected from cyclodextrins, substituted cyclodextrins, polymerized cyclodextrins and a mixture of cyclodextrins.

**8.** A hydrocracking process according to claim 7, in which the cyclodextrins are α-cyclodextrin, β-cyclodextrin and y-cyclodextrin respectively composed of 6, 7 and 8 α-(1,4)-bonded glucopyranose subunits.

**9.** A hydrocracking process according to claim 7, in which the substituted cyclodextrins are hydroxypropyl beta-cyclodextrin and methylated beta-cyclodextrins.

**10.** A hydrocracking process according to one or claims 1 to 9, in which said organic compound for carrying out said step i) is introduced such that the molar ratio {(metals from groups (VIII+VIB) in the oxide form present in the active phase of the catalyst obtained from said step iii)/organic compound} is in the range 10 to 300.

**11.** A hydrocracking process according to one of claims 1 to 10, in which said drying step ii) is carried out at a temperature in the range 50°C to 200°C.

**12.** A hydrocracking process according to one of claims 1 to 11, in which said heat treatment step iii) is carried out at a temperature in the range 350°C to 600°C.

**13.** A hydrocracking process according to one of claims 1 to 12, in which said hydrocracking catalyst is brought into contact, in the presence of hydrogen, with said hydrocarbon feed at a temperature of more than 200°C, at a pressure of more than 1 MPa, the hourly space velocity (volume flow rate of feed divided by the volume of catalyst) being in the range 0.1 to 20 $h^{-1}$ and the quantity of hydrogen introduced being such that the volume ratio of litres of hydrogen/litres of hydrocarbon is in the range 80 to 5000l/l.

**14.** A hydrocracking process according to one of claims 1 to 13, carried out in one or two-steps independently of the pressure at which said process is carried out.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1535983 A
- WO 9641848 A
- WO 0176741 A
- US 4012340 A
- US 3954673 A
- EP 466568 A
- EP 1046424 A


### Littérature non-brevet citée dans la description


- **J. SCHERZER ; A. J. GRUIA.** Hydrocracking Science and Technology. Marcel Dekker Inc, 1996
- **B. S CLAUSEN ; H. T. TOPSØE ; F. E. MASSOTH.** Catalysis Science and Technology. Springer-Verlag, 1996, vol. 11
- **B. S CLAUSEN ; H. T. TOPSØE ; F.E. MASSOTH.** Catalysis Science and Technology. Springer-Verlag, 1996, vol. 11
- **D.W. BRECK.** Zeolite Molecular Sieves Structure, Chemistry and Uses. J.WILLEY and sons, 1973